Europäisches Patentamt

European Patent Office

Office européen des brevets

(11) Numéro de publication: **0 377 391**
**A1**

## (12) DEMANDE DE BREVET EUROPEEN

(21) Numéro de dépôt: **89440001.9**

(22) Date de dépôt: **06.01.89**

(51) Int. Cl.5: **B60P 3/38**

(43) Date de publication de la demande:
**11.07.90 Bulletin 90/28**

(84) Etats contractants désignés:
**AT BE CH DE ES FR GB GR IT LI LU NL SE**

(71) Demandeur: **Martin, Pierre**
**4 rue des Carpières**
**F-68580 Strueth(FR)**

(72) Inventeur: **Martin, Pierre**
**4 rue des Carpières**
**F-68580 Strueth(FR)**

(74) Mandataire: **Nithardt, Roland**
**CABINET NITHARDT & BURKARD 12, rue du**
**17 Novembre**
**F-68100 Mulhouse(FR)**

(54) **Habitacle de camping repliable destiné à être installé sur le toit d'un véhicule.**

(57) L'invention fournit un habitacle repliable agencé pour offrir aux occupants de bonnes conditions de confort de jour et de nuit, un accès aisé et des facilités de rangement permettant une utilisation optimale du volume.

Des parois rigides et munies d'une isolation thermique (8′) sont articulées sur les bords d'un caisson de base (1) installé sur le toit d'un véhicule. Ces parois comprennent un couvercle (4), un panneau opposé (7), une paroi de fond (15) et une paroi d'entrée. La paroi de fond (15) comprend un caisson qui est saillant vers l'extérieur et qui renferme des équipements fixes (32 à 38) et des compartiments de rangement (40 à 42). Des banquettes (22, 44) prévues dans le caisson de base sont mobiles entre une position de nuit et une position de jour.

Cet habitacle repliable est destiné à être installé sur le toit d'un véhicule. Il peut aussi être utilisé sur une remorque ou au sol.

FIG.5

## HABITACLE DE CAMPING REPLIABLE DESTINE A ETRE INSTALLE SUR LE TOIT D'UN VEHICULE.-

La présente invention concerne un habitacle de camping repliable destiné à être installé sur le toit d'un véhicule, comportant :
- un caisson de base rigide et rectangulaire en plan, ouvert vers le haut, équipé d'au moins une couchette et agencé pour être fixé sur le véhicule,
- un couvercle rigide ayant un premier bord articulé sur le caisson de base et un second bord destiné à servir de faîte, ce couvercle étant mobile entre une position rabattue dans laquelle il repose sur le caisson de base et forme avec lui un compartiment de hauteur réduite, et une position déployée inclinée dans laquelle il forme une paroi de l'habitacle,
- un panneau rigide opposé au couvercle et articulé sur le caisson de base sur le bord opposé à celui de l'articulation du couvercle, pour être mobile entre une position rabattue dans laquelle il se trouve sous le couvercle et une position déployée inclinée dans laquelle son bord libre est raccordé au couvercle dans la zone du faîte,
- et des parois latérales escamotables s'étendant, dans la position déployée, sensiblement verticalement entre les bords du caisson de base, du couvercle et dudit panneau opposé pour fermer l'habitacle.

On connaît de nombreux types d'habitacles repliables de ce genre, dans lesquels les trois bords libres respectifs du caisson de base et du couvercle sont reliés par des parois souples, par exemple en toile de tente, qui n'assurent qu'un confort restreint et notamment une faible isolation thermique et phonique, ainsi qu'une protection limitée contre les intrusions. En outre, ces parois absorbent de l'humidité par temps pluvieux, ce qui est extrêmement désagréable lorsqu'elles doivent rester ensuite dans l'habitacle replié. A cet égard, seuls les habitacles à parois rigides offrent aux occupants les meilleures conditions de confort et de sécurité.

La demande de brevet **FR-A-2 409 170** décrit un habitacle à parois rigides du type spécifié plus haut, dans lequel le faîte est orienté parallèlement à l'axe longitudinal du véhicule, de même que les couchettes installées dans l'habitacle. L'accès est prévu à travers une trappe ménagée dans le toit du véhicule et dans le caisson de base. Cette solution est assez coûteuse et l'accès est malcommode si le véhicule n'est pas du type fourgon, dans lequel on a assez de place pour dresser une échelle. Dans les habitacles ordinaires, l'accès se fait le plus commodément par l'extérieur, le long d'un côté du véhicule. Cela n'est pratiquement pas possible avec le type d'habitacle décrit dans le document cité, car la porte se trouverait alors dans le couvercle ou dans le panneau opposé, qui sont inclinés. D'autre part, les parois rigides prennent de la place quand elles sont repliées, et cela nécessite de déplacer ou d'évacuer de l'habitacle la plupart des équipements mobiliers qu'il contient, à part les couchettes, et de les réinstaller chaque fois qu'on veut occuper l'habitacle. Le volume pris par ces équipements est donc mal utilisé, au détriment du confort des utilisateurs.

La présente invention vise à remédier aux inconvénients mentionnés ci-dessus, grâce à un habitacle agencé pour offrir à la fois de bonnes conditions de confort aux occupants, une possibilité d'accès aisé le long d'un côté du véhicule, et des facilités de rangement qui permettent une utilisation optimale du volume de l'habitacle.

Dans ce but, l'invention concerne un habitacle du type indiqué en préambule, caractérisé en ce que l'une des parois latérales est une paroi à caisson rigide comportant, dans sa partie centrale, un caisson compartimenté agencé pour recevoir des effets personnels, et/ou des équipements montés à demeure, cette paroi étant articulée sur un bord du caisson de base.

Ainsi, ce caisson compartimenté renferme un volume du rangement qui est disponible en tout temps, que l'habitacle soit déployé ou replié. En position déployée, ce caisson compartimenté peut former une saillie extérieure par rapport au bord correspondant du caisson de base, ce qui augmente le volume et la surface horizontale de l'habitacle déployé.

Les équipements de la paroi à caisson peuvent comprendre des appareils électriques et/ou des appareils à gaz, notamment pour l'éclairage, le chauffage, la cuisine, la réception radio/TV, etc..

Dans uns forme de réalisation avantageuse, ladite paroi latérale à caisson comporte sur sa face intérieure une table rabattable contre cette paroi. Cette table peut être articulée à la paroi à l'une de ses extrémités et comporter, à l'autre extrémité, un panneau articulé formant à choix, un pied rabattable ou une rallonge du plateau de la table. Ainsi cette table peut fermer certains compartiments de la paroi dans sa position rabattue, sans occuper une surface excessive, et former en position déployée une table suffisamment grande.

De préférence, le caisson de base est équipé d'au moins deux banquettes qui sont mobiles entre une position de jour où elles forment des sièges disposés vis à vis, et une position de nuit où elles forment au moins une couchette dans la partie centrale du caisson de base. Ces banquettes peuvent comporter des coffres de rangement montés sur des bras articulés.

La paroi latérale opposée à la paroi en caisson peut être de type rigide ou souple et elle comporte une porte d'accès. Ainsi, celle-ci se trouve avantageusement au-dessus d'un côté du véhicule, si le faîte et l'articulation du couvercle sont orientés transversalement par rapport au véhicule, ce qui est la forme la plus commode et la plus aérodynamique. De préférence, toutes les parois de l'habitacle sont formées d'éléments rigides et sont pourvues d'une couche d'isolation thermique. D'autre part, des moyens élastiques tels que des ressorts à gaz sont prévus entre le caisson de base et le couvercle à l'extérieur des parois latérales, pour soulever le couvercle et le panneau opposé.

D'autres caractéristiques de l'invention et ses avantages apparaîtront mieux dans la description suivante d'un exemple de réalisation, en référence aux dessins annexés, dans lesquels :

La figure 1 est une vue en perspective montrant l'habitacle en position fermée, sur le toit d'un véhicule,

La figure 2 est une vue analogue à la figure 1, montrant l'habitacle en position déployée,

La figure 3 est une vue en perspective montrant le côté opposé à l'entrée de l'habitacle, avec sa paroi à caisson,

La figure 4 est une vue schématique en coupe transversale de l'habitacle déployé, et

La figure 5 est une vue schématique en coupe longitudinale, montrant en élévation la paroi à caisson.

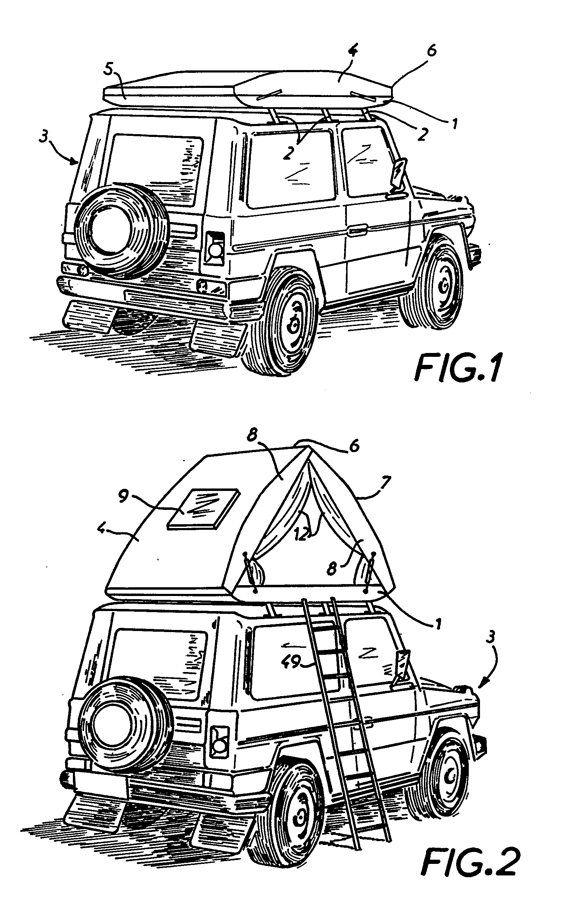

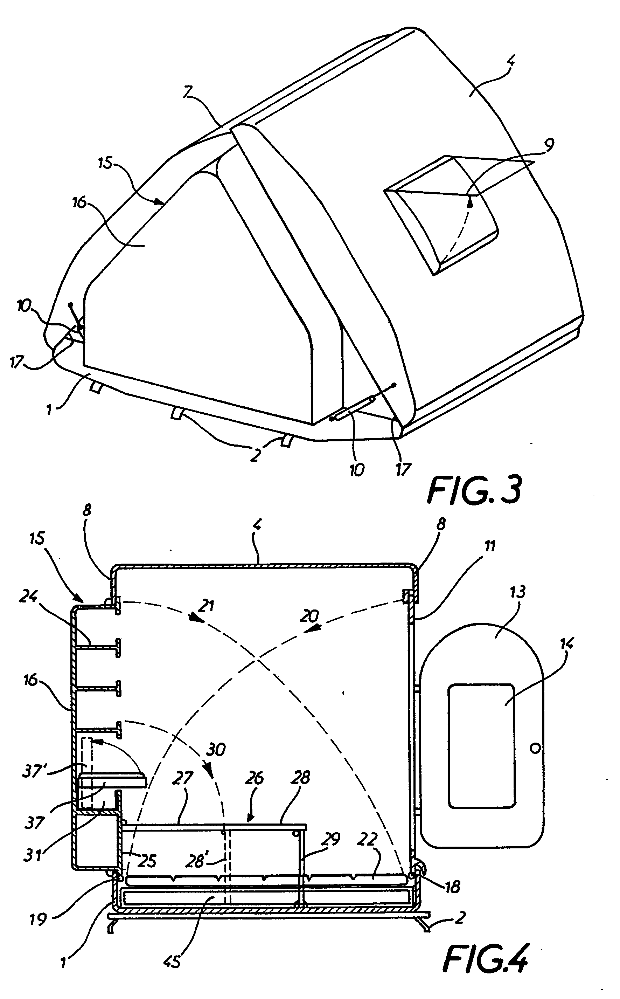

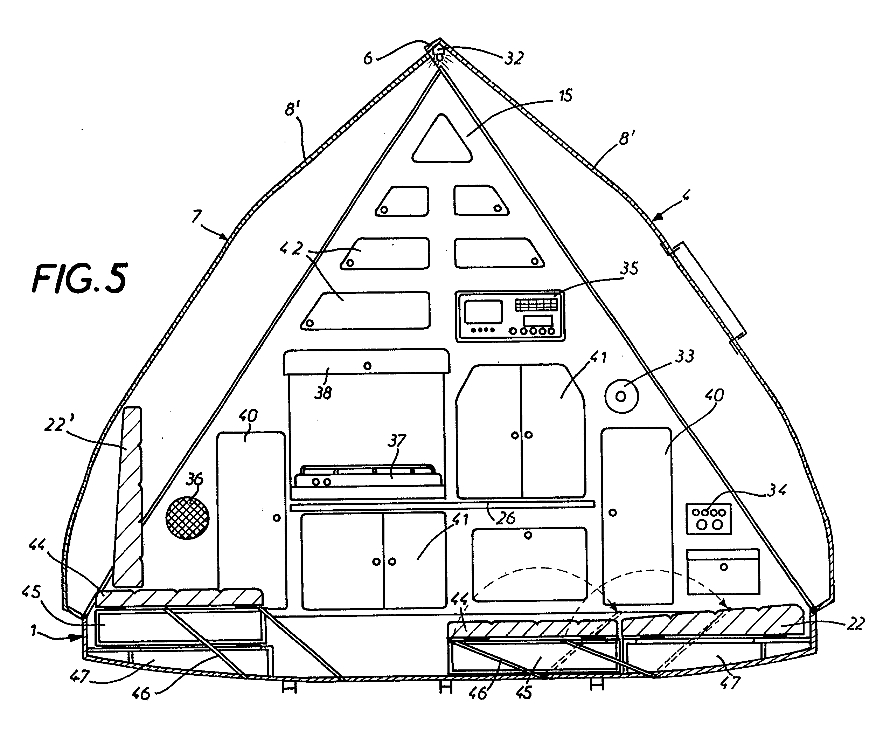

En référence aux figures, l'habitacle repliable comporte un caisson de base 1 rectangulaire en plan, profilé longitudinalement et pourvu d'organes de support 2 de manière amovible pour être montés de manière connue sur le toit d'un véhicule 3. Un couvercle profilé 4 est articulé à l'une de ses extrémités sur un bord transversal 5 (ici le bord arrière) du caisson de base 1. Dans sa position rabattue illustrée en figure 1, ce couvercle est fixé au caisson de base le long de son bord avant 6. Il recouvre et obture le caisson de base formant un compartiment de hauteur réduite, mais suffisante pour contenir tout l'équipement nécessaire dans l'habitacle, et même des effets supplémentaires. Dans la position déployée illustrée en figure 2, le bord 6 du couvercle 4 forme le faîte de l'habitacle, et il est assemblé au bord supérieur d'un autre panneau rigide 7, qui est placé en position opposée au couvercle 4 et articulé sur le bord avant du caisson de base 1. Le couvercle 4 et le panneau avant 7 ont un profil bombé, ce qui augmente le volume intérieur dans les deux positions, et des rebords latéraux 8 sensiblement verticaux, facilitant la jonction avec les parois latérales. Les trois éléments 1, 4 et 7 sont réalisés de préférence sous la forme de coques rigides soit en polyester armé de fibres de verre, avec une couche d'isolation thermique, soit en toute autre matériau rigide et léger pouvant convenir à ce genre de construction, tel que sandwich - bois -mousse - aluminium. Les dimensions du panneau avant 7 sont telles, qu'il s'emboîte à l'intérieur du couvercle 4 en position rabattue. De plus, le couvercle 4 comporte avantageusement un lanterneau basculant translucide 9 équipé d'une moustiquaire pour l'éclairage naturel et l'aération. Comme le montre la figure 3, des éléments élastiques tels que des vérins ou ressorts à gaz 10 sont montés à l'avant et à l'arrière du caisson de base pour compenser le poids du couvercle 4 et du panneau avant 7 pendant les manoeuvres. En position déployée, les zones triangulaires subsistant entre les bords des coques 1, 4 et 7 sont obturées par deux parois latérales situées au-dessus des flancs du véhicule 3, une paroi d'entrée 11 comportant un accès à l'habitacle grâce à des éléments en toile 12 ou à une porte 13 avec baie transparente 14, et une paroi de fond 15 comprenant un caisson central 16 et deux ailes triangulaires 17 qui ferment la zone des vérins à gaz 10 et permettent le passage de ceux-ci. Comme le montre la figure 4, les parois latérales rigides 11 et 15 sont articulées en 18 et 19 sur les bords longitudinaux du caisson de base 1, de manière à pouvoir être rabattues successivement suivant les flèches 20 et 21 sur des couchettes 22 disposées au fond du caisson 1. En position déployée, le caisson 16 de la paroi de fond se trouve en saillie extérieure par rapport aux bords latéraux des éléments, 1, 4 et 7 et éventuellement par rapport au véhicule, ce qui assure un précieux gain de volume de l'habitacle. En position rabattue, il se loge dans la partie centrale bombée des éléments 7 et 4. Ce caisson peut avantageusement être réalisé sous forme d'une coque rigide faite des mêmes matériaux que le couvercle avec une couche d'isolation thermique 8'. Dans le présent exemple, il est divisé en compartiments grâce à des cloisons intermédiaires 24 et une paroi frontale ajourée 25 qui peut être en bois ou en un autre matériau.

En référence à la figure 4, une table rabattable 26 est articulée sur la paroi frontale 25 de manière que, en position rabattue contre cette paroi, latable obture plusieurs des compartiments du caisson 16, dans lesquels on peut donc ranger différents effets qui ne tomberont pas quand on repliera l'habitacle. La table 26 comporte un plateau principal 27, une rallonge articulée 28 et un pied 29. Quand on l'abaisse suivant la flèche 30, on peut utiliser la rallonge 28 en tant que pied 28' pour disposer d'une petite table, ou bien déployer cette rallonge, la table s'appuyant alors sur le pied 29 .

Dans la forme de réalisation illustrée en figure 5, les compartiments de la paroi de fond 15 sont agencés de diverses manières. Certains contiennent des équipements montés à demeure et d'autres sont agencés pour contenir des effets personnels, de petits bagages ou du matériel divers dont les occupants peuvent avoir besoin dans l'habitacle. En l'occurrence, les équipements fixes comprennent un évier 31, un éclairage électrique (plafonnier 32, spot de lecture 33), des prises et interrupteurs électriques 34 pouvant être raccordés à la batterie du véhicule, un combiné radio - TV - réveil 35 avec des haut-parleurs 36, un réchaud de cuisine à gaz 37 rabattable en 37' et une hotte de ventilation 38 avec sortie extérieure. Une bonbonne de gaz peut être logée dans l'un des compartiments du caisson 16 et alimenter aussi un appareil de chauffage. En outre, il est prévu des penderies 40 ou armoires 41 à portes coulissantes, ainsi que de petits casiers 42 dont certains peuvent être obturés par la table rabattable 26. Ainsi, tous les équipements et le matériel contenus dans la paroi à caisson 15 peuvent y rester quand on replie l'habitacle, puis ils sont disponibles immédiatement pour les occupants quand on le déploie à nouveau.

La figure 5 montre également une disposition avantageuse de deux paires de banquettes transverales 22 et 44 dans le caisson de base 1. Les deux banquettes centrales 44 comportent chacune un matelas en mousse et un coffre 45 dont chaque extrémité est montée sur une paire de bras pivotants 46. Pour passer de la position de nuit dessinée dans la moitié droite de la figure, à une position de jour qui est dessinée dans la moitié gauche et dans laquelle les banquettes forment deux sièges disposés vis à vis, on bascule les coussins des banquettes 22 pour servir de dossiers 224, puis on déplace les banquette 44 comme l'indiquent les flèches, pour les placer sur des coffres latéraux 47., Grâce aux sièges ainsi obtenus et au dégagement de l'espace central occupé précédemment par les éléments 44 et 45, ainsi qu'à l'ensemble des équipements à disposition, un confort remarquable est offert aux occupants de l'habitacle, même pendant la journée. Une échelle légère et pliante 49 (figure 2) permet l'accès à l'habitacle.

L'habitacle de camping décrit ci-dessus à titre d'exemple peut faire l'objet de nombreuses modifications et variantes évidentes pour un homme du métier, sans sortir du cadre de l'invention. En particulier, toutes sortes d'équipements ou d'aménagements peuvent être prévus et les matériaux utilisés pour la construction des caissons peuvent varier. Dans des conditions estivales, la paroi d'entrée 11 rigide peut être remplacée par une paroi en toile. Bien que cet habitacle soit destiné particulièrement à une installation sur le tôit d'un véhicule, on peut aussi l'utiliser ailleurs, par exemple sur une remorque ou à même le sol. En plus du camping, il peut servir de chambrette d'appoint.

## Revendications

1. Habitacle de camping repliable destiné à être installé sur le toit d'un véhicule, comportant :
- un caisson de base (1) rigide et rectangulaire en plan, ouvert vers le haut, équipé d'au moins une couchette et agencé pour être fixé sur le véhicule (3),
- un couvercle rigide (4) ayant un premier bord articulé sur le caisson de base et un second bord destiné à servir de faîte (6), ce couvercle étant mobile entre une position rabattue dans laquelle il repose aur le caisson de base et forme avec lui un compartiment de hauteur réduite, et une position inclinée déployée dans laquelle il forme une paroi de l'habitacle,
- un panneau rigide (7) opposé au couvercle et articulé sur le caisson de base sur le bord opposé à celui de l'articulation du couvercle, pour être mobile entre une position rabattue, dans laquelle il se trouve sous le couvercle, et une position déployée inclinée dans laquelle son bord libre est raccordé au couvercle dans la zone du faîte,
- et des parois latérales escamotables s'étendant, dans la position déployée, sensiblement verticalement entre les bords du caisson de base, du couvercle et dudit panneau opposé pour fermer l'habitacle,
caractérisé en ce que l'une des parois latérales est une paroi à caisson rigide (15) comportant dans sa partie centrale un caisson compartimenté (16) agencé pour recevoir des effets personnels et/ou des équipements montés à demeure, cette paroi étant articulée sur un bord du caisson de base (1).

2. Habitacle selon la revendication 1, caractérisé en ce que ledit caisson compartimenté (16), en position déployée, forme une saillie extérieure par rapport aux bords correspondants du caisson de base (1).

3. Habitacle selon la revendication 1 ou 2, caractérisé en ce que ladite paroi latérale à caisson (15) comporte sur sa face intérieure une table (26) rabattable contre cette paroi.

4. Habitacle selon la revendication 3, caractérisé en ce que ladite table (26) est articulée à la paroi à l'une de ses extrémités et comporte, à l'autre extrémité un panneau articulé (28) formant à choix un pied rabattable ou une rallonge du plateau de table.

5. Habitacle selon l'une des revendications précédentes, caractérisé en ce que lesdits équipements de la paroi à caisson (15) comprennent des appareils électriques (33 à 36) et/ou des appareils à gaz (37).

6. Habitacle selon la revendication 5, caractérisé en ce que lesdits appareils comprennent un appareil de chauffage et/ou un réchaud de cuisine (37).

7. Habitacle selon l'une des revendications précédentes, caractérisé en ce que le caisson de base est équipé d'au moins deux banquettes (44) qui sont mobiles entre une position de jour où elles forment des sièges disposés vis à vis, et une position de nuit où elles forment au moins une couchette dans la partie centrale du caisson de base.

8. Habitacle selon la revendication 7, caractérisé en ce que les banquettes (44) comportent des coffres (45) montés sur des bras articulés (46).

9. Habitacle selon l'une des revendications précédentes, caractérisé en ce que la paroi latérale (11) opposée à la paroi en caisson comporte une porte d'accès (13).

10. Habitacle selon l'une des revendications précédentes, caractérisé en ce que toutes ses parois sont formées d'éléments rigides et sont pourvues d'une couche d'isolation thermique (8').

11. Habitacle selon l'une des revendications précédentes, caractérisé en ce que des moyens élastiques (10) pour le soulèvement du couvercle (4) sont prévus entre le caisson de base (1) et le couvercle.

FIG.1

FIG.2

FIG.3

FIG.4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-2 718 015  (FISK)<br>* Figure 5; revendication 1; colonne 2, lignes 49-62 *<br>--- | 1,10,11 | B 60 P    3/38 |
| A | FR-A-1 418 589  (CAPEL)<br>* Figures 1,2;  résumé *<br>--- | 1,9,10 | |
| A | US-A-3 359 693  (MITAS)<br>* En entier *<br>--- | 1,10 | |
| E | FR-A-2 617 775  (MARTIN)<br>* En entier *<br>----- | 1-11 | |

**DOMAINES TECHNIQUES RECHERCHES (Int. Cl.5)**

B 60 P

Le présent rapport a été établi pour toutes les revendications

| Lieu de la recherche | Date d'achèvement de la recherche | Examinateur |
|---|---|---|
| LA HAYE | 06-09-1989 | VANNESTE M.A.R. |